# EUROPEAN PATENT SPECIFICATION

(11) **EP 0 440 841 B1**
(45) Date of publication and mention of the grant of the patent: **20.09.1995**
(21) Application number: 90102300.2
(22) Date of filing: 06.02.1990
(51) Int. Cl.: B29C 45/26, B29C 45/36, B29C 45/43

(54) **Process and apparatus for direct gating injection molding**
Verfahren und Vorrichtung zum Spritzgiessen mit direktem Angusssystem
Procédé et dispositif de moulage par injection à système d'entrée directe

(43) Date of publication of application: 14.08.1991
(73) Proprietor: HUSKY INJECTION MOLDING SYSTEMS LTD., Bolton Ontario L7E 5S5 (CA)
(72) Inventor: Schad, Robert D., Toronto, Ontario (CA)
(74) Representative: Weiss, Peter, Dr. rer.nat.

(56) References cited:
- EP-A- 0 124 951
- EP-A- 0 315 586
- DE-A- 1 779 104
- DE-B- 1 259 089
- US-A- 3 671 159
- US-A- 4 726 925
- US-A- 4 743 420

## Description

The present invention relates to a process and apparatus for injection molding thin walled articles such as hollow containers, in particular thin walled containers with comparatively thick lips such as heat sealable food containers, vending cups and beverage tumblers.

Molded articles such as thin walled containers have comparatively thick lips or rims have traditionally been produced by injection molding, usually with a hot runner mold directly gated into the bottom of the container. Limitations on molding cycle and minimization of sidewall thickness are often imposed by the thickness and configuration of the article's lip. In some container styles, the lip is considerably thicker than the side wall, typically a lip of 0,76 - 1,02 mm (.030-.040") compared to a sidewall thickness of 0,38 - 0,51 mm (.015-.020"). It becomes increasingly difficult to properly pack the lip and to eliminate sink marks, when the resin must be forced through the restriction of a very thin sidewall from a gate at the bottom of the part. Generally, the resin must be raised higher in temperature to promote flow through this thin section. The consequences of doing this are that the molding cycle is slowed by the time taken to cool the thickest part of the container - the lip.

One approach which has been found to overcome many of the molding problems associated with molding thick lip/thin sidewall articles is injection blow molding. U.S.-A-4,540,543 illustrates a typical blow molding system for forming thin walled containers. There are however several problems which remain.

Injection blow molding requires specialized molds and expensive support equipment. Further there is the problem of the tendency to create a mold separation force when injecting the resin into the bottom of the part. This occurs because the top of the mold core acts as a post. As the resin flows under pressure against the top of the mold core, the mold core is pushed away from the mold cavity. The mold separation force thus created can be quite large because the relative cross section mold area at the bottom of the part is relatively large.

Another approach which has been used to form thin walled articles is sequential injection molding. In this approach, a first plastic material is injected into a cavity through a first gate. This material is then cooled to solidify the first plastic. Subsequent to injecting the first plastic, a second plastic material is injected through a second gate into the cavity. The second plastic fills the cavity and fuses with the previously injected plastic. Thereafter, the second plastic is cooled to solidify the fused unit. US-A-4,381,275 and US-A-4,508,676, illustrate this approach.

The purpose of sequential injection is to have the cooled first plastic material stabilize the core section by impeding movement of the core section caused by injection of the second plastic material. This approach however has not been entirely successful in eliminating the side load problem. Additionally, it does lead to the formation of weak weld lines where the first and second plastic materials are fused. Weld lines are typically at their strongest when both melt edges are at the same high temperature.

Another method for forming molded articles having comparatively thick lip portions is shown in US-A-4,622,002. A split cavity mold is shown with an edge gating system feeding directly into the lip of the part. The primary disadvantage of this arrangement is that the alignment of the cavity halves with the core will not adequately resist the considerable side load induced by the injection of the resin at the lip. This side force will cause the mold core to shift out of axial alignment with the mold cavity before the resin has filled the cavity. This in turn will result in a part having an unequal sidewall thickness. A second disadvantage is that the mold must contain complicated mechanisms to synchronize the opening and closing of the cavity halves during the cycle and the runner system must be arranged so the runner axis is perpendicular to the core, and the axis of the machine. This entails additional complexity and expense. A third disadvantage is the formation of gate vestiges on the outer perimeter of the lip.

The EP-A 0 124 951 shows a method for injection molding container-like objects. A mold cavity of a mold is bounded by a core and a female cavity portion divided in its longitudinal direction in two jacket parts. The mold is opened and closed by a relative axial displacement of the core on the one hand and of the cavity portion on the other, and by a relative radial displacement of the jacket parts. Gates and hot runner nozzles are arranged near a comparatively thick lips defining portion of an upper rim.

Also the US-A-4 726 925 shows a part of an injection molding machine having a first mold portion defining a female cavity portion defined by several mold members.

Furthermore a core portion is movable between a mold open position and the mold closed position. The core is substancially centered within said female cavity portion when said portions are in that mold closed position and defining with that female cavity portion a space in the shape of a one-piece cylindrical plastic body. At least two gates and hot runner nozzles associated with each gate for introducing molten plastic material are arranged intermediate to ends of the article.

It is an object of the present invention to provide an injection molding process and apparatus for forming thin walled articles.

It is a further object of the present invention to provide a process and apparatus as above which does not create any significant side loads so as to cause misalignment of the mold cavity/core portions.

It is yet a further object of the present invention to provide a process and apparatus as above which allows articles to be formed with less pressure and in a fast time.

These and other objects and advantages will become more apparent from the following description and drawings wherein like reference numerals depict like elements.

### SUMMARY OF THE INVENTION

It has been found that the foregoing objects and advantages are obtained by the apparatus and process of the present invention according to claims 1 and 7 respectively.

The apparatus used comprises an injection molding machine having a first mold portion defining a female cavity portion, a second mold portion defining a male core portion and means for moving the mold portions between a mold open position and a mold closed position. In the mold closed position, the mold core portion is substantially centered within the mold cavity portion and defines with the mold cavity portion a space in the shape of the article being molded. The space has a sidewall defining portion and a circumferentially extending region of greater thickness located along an intermediate portion of the sidewall defining portion. The machine further includes means for introducing molten plastic material into said circumferentially extending region and further into said space without creating any significant side loads and without disturbing the mold core/cavity alignment.

In a particularly useful embodiment, the circumferentially extending region is located approximately at the middle of the sidewall defining portion. The localized thickness increase in this region encourages the plastic material to racetrack around the circumference of the article before extending toward its extremities, thus promoting equal filling of the sides. It has been found that this approach is advantageous over rim gating at the lip approaches in that the effective flow length of the plastic material is halved. Consequently, thinner walled articles can be more efficiently produced. Further, the space can be filled with plastic material at a reduced pressure and/or in a faster time than if a rim gating approach was used. Yet another advantage of this approach is that the core construction can be simplified.

The plastic material introduction means may be two, three, or more gates spaced about the circumferentially extending region. Preferably, the gates are spaced equally around the region so as to minimize the production of side forces.

The process of the present invention broadly comprises providing an injection molding machine having a first mold portion defining a female cavity portion and a second mold portion defining a male core portion with the male core portion being substantially centered within the female cavity portion and defining with the female cavity portion a space in the shape of the article being molded. The space has a sidewall defining portion and a circumferentially extending region of greater thickness positioned intermediate ends of the sidewall defining portion. The process further comprises introducing molten plastic material into said circumferentially extending region and further into said space without creating any significant side loads and without disturbing the mold core/cavity alignment. In a particularly useful embodiment, the molten plastic material is simultaneously and continuously introduced into the region at at least two spaced apart portions.

Further advantages and features of the present invention will become clearer from the following description.

### BRIEF DESCRIPTION OF THE DRAWINGS

Figure 1 illustrates in partial cross section a core/cavity stack arrangement having two hot top gates located within the mold core;
Figure 2 illustrates an alternative core/cavity stack wherein the core has two parts;
Figure 3 is yet another core/cavity stack arrangement for forming a thin walled article open at its top and bottom; and
Figure 4 is an illustration of an article formed by the apparatus of Figure 14.

### DETAILED DESCRIPTION

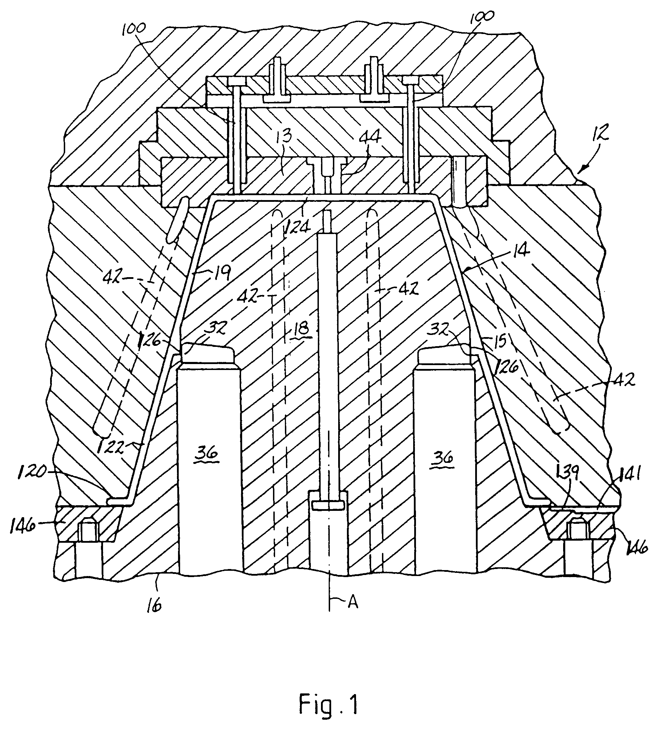

Referring to Figure 1, an embodiment of an injection molding apparatus in accordance with the present invention comprises a mold stack including mold halves 12 and 16. The first mold half 12 comprises a female mold cavity 14 defined by a plurality of walls 15 and a pad 13. The second mold half 16 comprises a male mold core 18. Suitable means not shown are provided for moving the mold halves 12 and 16 between mold open and mold closed positions. For example, the mold half 12 may be secured to a fixed platen not shown while the mold half 16 may be secured to a movable platen not shown. The stack as shown in Figure 1 is in a mold closed position. The stack assembly may further include a lock ring and tapers not shown for mechanically aligning the mold halves along the axis A-A. Alignment of the mold halves is important from the standpoint of producing a molded article having sidewalls with a substantially uniform thickness.

In the mold closed position, the mold core 18 is substantially centered within the mold cavity 14 and defines with the mold cavity a space 19 in the shape of the article or part to be formed. As can be seen from Figure 1, the space 19 has a lip defining portion 120, a sidewall defining portion 122, a bottom defining portion 124 and a localized region 126 having a thickness greater than the thickness of the sidewall portion. In a preferred embodiment, the localized region 126 extends circumferentially about the space 19 and is located at the approximate mid-point of the sidewall portion 122.

Molten plastic is directly gated into the region 126 using gates 32. The molten plastic is introduced into the region 126 and the space 19 through each gate 32 simultaneously. The molten plastic continues to flow through all gates 32 until the space 19 is filled.

While two gates are illustrated, it should be recognized that more than two gates can be used if desired. The spacing of the gates depends on the number used. Preferably the gates are spaced equally about the region 126 so as to minimize the production of unwanted side loads. Thus, the gates 32 shown in Figure 12 are spaced approximately 180° apart. Each gate 32 communicates with a hot runner nozzle 36 through which molten plastic material is supplied.

It has been found that molten plastic introduced into the region 126 racetracks around the region 126 and rapidly fills it. After the region 126 is filled, the plastic material flows outwardly and evenly to the ends of the space 19 defining the lip portion 120 and bottom portion 124. The advantages to this approach include the following. Thinner articles or parts can be formed than with rim gating at the lip because the effective flow length of the resin is halved. Additionally, the space 19 can be filled using less pressure and/or faster because the plastic material travels a shorter distance. Still further, all weld lines generated during molding are at their optimum strength because the plastic material is simultaneously and continuously injected by all gates and all of the plastic is at substantially the same high temperature. Another advantage gained by the approach of the present invention is minimization of core shift by the rapid filling of the region 126 before the filling of the thinner sidewall defining portions 122.

As the plastic advances toward the extremities of the space 19, air may become trapped in the cavity space. Suitable air vents, such as vent 44 in the pad 13, may be provided to permit such air to escape. Air in the lip portion 120 may be vented in a conventional manner along the parting line between the mold halves using a vent 139 and a vent groove 141.

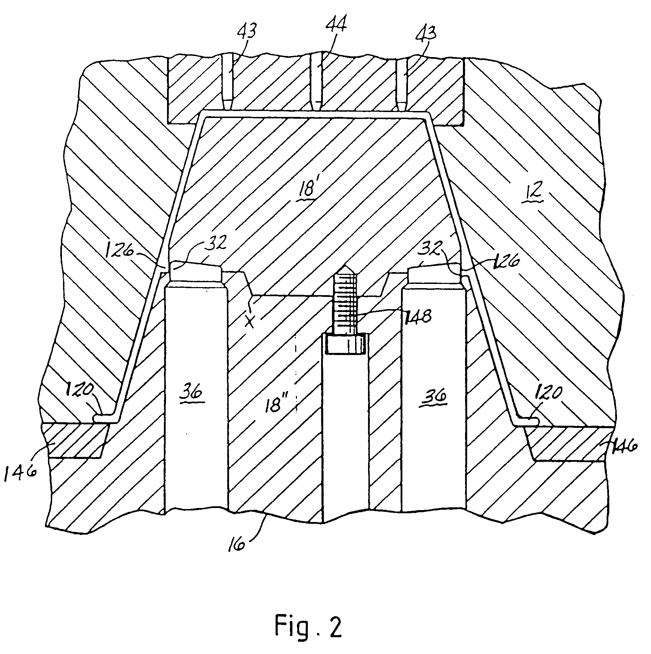

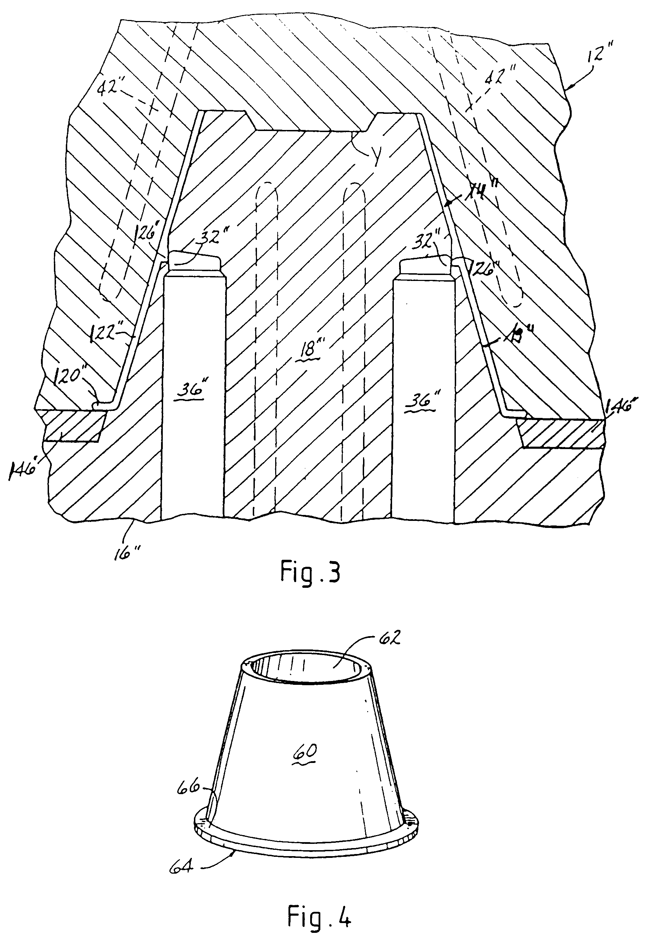

As previously discussed, one of the primary advantages attendant to the apparatus of Figure 1 as well as the other apparatus embodiments of Figures 2 and 3 is the ability to introduce the plastic material into the cavity space with substantially no side loads. This is because the plastic material flows into and fills the region 126 first before flowing into the sidewalls in a balanced fashion. As a result, the mold core 18 remains substantially centered within the mold cavity 14. Since the mold core and cavity substantially maintain their alignment throughout molding, articles or parts thus produce have sidewalls with a substantially uniform thickness. Yet another advantage is the substantial absence of forces tending to cause mold opening.

After the plastic material has substantially completely filled the cavity space 19, solidification occurs through cooling of the mold halves. Any suitable means known in the art may be used to cool the mold halves 12 and 16. Preferably, cooling is accomplished by flowing a suitable coolant fluid through cooling channels 42. Since the region 126 is the thickest part of the article and is closest to the gate and therefore the hottest, particular attention is given to providing efficient cooling in the region by placing the cooling channels in as close proximity thereto as possible.

Once the article has solidified on the mold core 18, the mold halves are moved into a mold open position. The article may be ejected in the following manner. One or more vents 44 may be provided in the pad 13. The vent(s) 44 may be connected to both a vacuum and an air source not shown. As the core 18 moves toward the mold open position, a vacuum may be pulled through the vent(s) 44 to hold the part in position against the mold cavity. If desired, air may be blown through fixed vents 43 on the core to assist in maintaining the article in position. Stripper rings 146 may be provided to assist in removing the article from the mold core 18. The stripper rings 146 may surround the core and may be moved relative thereto in a well known manner to move the article off the core.

When the core 18 reaches the full mold open position, the vacuum may be stopped and air may be caused to flow through the vent(s) 44. The air flow through the vent(s) 44 operates to blow the article out of the mold cavity. To assist in ejecting the article, one or more moving vents or vent pins 100 communicating with the air source not shown may be provided. When the mold has fully opened, the cavity plate may be advanced causing the vent pin(s) 100 to be opened to allow a large volume of air to be supplied to the base of the article pushing it out of the cavity. Obviously, the negative air pressure is turned off or reversed at this time.

If desired, the vents 43 and 44 and vent pins may be omitted. In such an instance, ejection of the molded article is achieved solely through the use of stripper rings 146.

In operation, the mold halves 12 and 16 are moved to a mold closed position. Molten plastic is then introduced into the region 126 by gates 32. The plastic is introduced through all of the gates simultaneously and continuously until the entire space 19 is substantially filled. Thereafter, the plastic material is cooled and solidified. After solidification has been completed, the mold halves are opened and the fabricated article or part is ejected. It has been found that the system of Figure 1 may be used to make 3- or 5-gallon containers.

If desired, the mold core half may be formed in two pieces 18 and 18' as shown in Figure 2. This greatly simplifies core construction and allows the gates 32 to be machined with great accuracy and simplicity into at least one of the prices as they are made in the two core halves separately. Suitable means such as bolts 148 may be provided to join the core pieces 18 and 18' together. The taper X insures proper alignment between the pieces 18 and 18'.

Figure 3 illustrates an alternative stack arrangement for forming an article or part 60 which is open at its top end 62 and bottom end 64 and which has a lip portion 66. As shown in Figure 3, the arrangement includes a first half 16'' with a mold core 18'' and second mold half 12'' with a cavity portion 14''. The mold core 18'' and the mold cavity 14'' are aligned to each other using the taper Y. As before, two gates 32'' are provided to introduce plastic material into the cavity 19''. Suitable means such as channels 42'' are provided to cool the plastic material. As before, stripper rings 146'' may be provided to eject the solidified part from the mold core.

While internal gating is preferred, it is possible to design the mold cavity half to accommodate external gating. In such a system, the space 19 may be redesigned so that region 126 extends circumferentially around an external portion of said space. Alternatively, the space 19 may remain as shown in Figure 1 and external gates may be positioned adjacent the outer edge of the thickened region. This alternative is useful where the molded article is to have a smooth outer surface.

As before, articles formed using the apparatus and process of the present invention may be used as heat sealable food containers, vending cups, beverage tumblers and the like.

As can be seen from the foregoing discussion, the direct gating approach illustrated herein improves the core shift characteristics of the mold. The gates initially fills the comparatively thick region 126 before the plastic material flows along the sidewall portions. Thereafter, the plastic material flows substantially equally along the sidewalls causing substantially equal forces to be applied to the core and the cavity. As a result, the core remains substantially centered within the mold cavity. The substantial absence of any core shift in turn results in a molded article having sidewalls with substantially equal thicknesses. The gating approaches used herein also significantly reduce those forces tending to cause the mold to open.

It is apparent that there has been provided in accordance with this invention, a process and apparatus for direct gating injection molding which fully satisfy the objects, means, and advantages set forth hereinbefore. While the invention has been described in combination with specific embodiments thereof, it is evident that many alternatives, modifications, and variations will be apparent to those skilled in the art in light of the foregoing description. Accordingly, it is intended to embrace all such alternatives, modifications, and variations as fall within the scope of the appended claims.

## Claims

1. An apparatus for injection molding a hollow plastic article (60), said apparatus comprising:
an injection molding machine having a first mold portion (12, 12'') defining a female cavity portion (14, 14'') a second mold portion (16, 16'') defining a male core portion (18, 18', 18'', 18'''), and said mold portions being movable between a mold open position and a mold closed position;
said mold core portion (18, 18', 18'', 18''') being substantially centered within said mold cavity portion (14, 14'') when said mold portions (12, 12'', 16, 16'') are in said mold closed position and defining with said cavity portion (14, 14'') a space (19, 19'') in the shape of said article (60), said space (19, 19'') having a sidewall defining portion (122, 122'') and a circumferentially extending region (126, 126'') of greater thickness positioned intermediate two ends of sidewall defining portion (122, 122''); and
at least two gates (32, 32'') and hot runner nozzles (36, 36'') associated with each gate (32, 32'') for introducing molten plastic material into said circumferentially extending region (126, 126'') and further into said space (19, 19'') without creating any significant side load,
whereby said mold core portion (18, 18', 18'', 18''') remains substantially centered within said mold cavity portion (14, 14'').

2. The apparatus of claim 1, wherein:
said circumferentially extending region (126, 126'') lies at the middle of said sidewall defining portion (122, 122''); and
said at least two gates (32, 32'') and associated hot runner nozzles (36, 36'') for simultaneously and continuously introducing said molten plastic material into said space (19, 19'') are arranged at two opposed portions of said circumferentially extending region (126, 126'').

3. The apparatus of claim 1 or 2 wherein said at least two gates (32, 32'') are positioned adjacent portions of said circumferentially extending region (126, 126'') and are equispaced from each other, said gates (32, 32'') substantially filling said circumferentially extending region (126, 126'') with molten plastic material before filling remaining portions of said space (19, 19'') so as to minimize shifting between said mold core (18, 18', 18'', 18''') and said mold cavity (14, 14'').

4. The apparatus of claim 3 wherein each said gate (32, 32'') is positioned adjacent either an interior side or an exterior side of said space (19, 19'') and communicates with a hot runner nozzle (36, 36'').

5. The apparatus of claim 3 or 4 wherein said male core portion comprises two pieces (18', 18'') and said gates (32) are machined in at least one of said pieces.

6. The apparatus of at least one of the claims 1 - 5 further comprising:
means for cooling said molten plastic in said space (19, 19'') after said space (19, 19'') has been completely filled with said molten plastic so as to form improved weld portions; and
means for ejecting said article (60) from said machine;
said ejecting means being formed by either a stripper ring (146, 146'') surrounding said mold core portion (18, 18', 18'', 18''') or at least one vent (43, 44) communicating with both a vacuum source and an air source whereby said article (60) is held within said mold cavity portion (14) by the application of negative pressure through said at least one vent (43, 44) by said vacuum source as said mold core portion (18, 18', 18'') moves towards said mold open position and said article (60) is ejected from said mold cavity portion (14) by blowing air from said air source through said at least one vent (43, 44) when said mold core portion (18, 18', 18'') reaches said mold open position.

7. A process for injection molding a hollow article (60) which comprises the steps of:
providing an injection molding machine having a first mold portion (12, 12'') defining a female cavity portion (14, 14'') and a second mold portion (16, 16'') defining a male core portion (18, 18', 18'', 18'''), said male core portion (18, 18', 18'', 18''') being substantially centered within said female cavity portion (14, 14'') when said mold portions (12, 12'', 16, 16'') are in a mold closed position and defining a space (19, 19'') in the shape of said article (60) with said female cavity portion (14, 14''), said space (19, 19'') having a sidewall defining portion (122, 122'') and a circumferentially extending region (126, 126'') of greater thickness positioned intermediate two ends of said sidewall defining portion (122, 122''); and
introducing molten plastic material into said circumferentially extending region (126, 126'') and further into said space (19, 19'') through at least two gates (32, 32'') and hot runner nozzles (36, 36'') associated with each gate (32, 32'') without creating any significant side loads,
whereby said mold core portion (18, 18', 18'', 18''') remains substantially centered within said mold cavity portion (14, 14'').

8. The process of claim 7 wherein said molten plastic material is introduced simultaneously and continuously into said region (126, 126'') at at least two portions of said circumferentially extending region (126, 126'') through said at least two gates (32, 32'').

9. The process of claim 8 wherein:
said molten plastic material is injected through said gates (32, 32'') so that said circumferentially extending region (126, 126'') fills before said portions of said space (19, 19'') defining said sidewalls (122, 122'') for said article (60) so as to minimize shifting between said mold core portion (18, 18', 18'', 18''') and said mold cavity portion (14, 14'').

10. The process of claim 9 further comprising:
cooling said molten plastic after said space (19) has been completely filled with said molten plastic; and
ejecting said article (60) from said machine after said cooling step has been completed, said ejecting step including providing at least one vent (43, 44) communicating with both a vacuum source and an air source and at least one vent pin (100) communicating with said air source, maintaining said article (60) in position against the mold cavity (14) by applying a vacuum through said at least one vent (43, 44) as said mold core (18, 18', 18'') moves towards a mold open position, and blowing air through said at least one vent (43, 44) and said at least one vent pin (100) to eject said article (60) from said mold core (18, 18', 18'').

11. The process of claim 9 further comprising:
cooling said molten plastic after said space (19, 19'') has been completely filled with said molten plastic; and
ejecting said article (60) from said machine after said cooling step has been completed, said ejecting step including providing a stripper ring (146, 146'') substantially surrounding said mold core portion (18, 18', 18'', 18'''), and moving said stripper ring (146, 146'') relative to said mold core portion (18, 18', 18'', 18''') to eject said article (60) from said mold core (18, 18', 18'', 18''').

## Patentansprüche

1. Vorrichtung zum Spritzformen von hohlen Kunststoffgegenständen (60), wobei die Vorrichtung folgendes umfasst:
Eine Spritzformeinrichtung, die aus einem ersten, einen Hohlraumteil (14, 14'') definierenden Formteil und einem zweiten, einen Formkernteil (18, 18', 18'', 18''') definierenden Formteil (16, 16'') besteht, wobei die Formteile zwischen einer Formöffnungslage und einer Formschliesslage bewegbar sind;
dass der Formkernteil (18, 18', 18'', 18''') im wesentlichen innerhalb des Formhohlraumteil (14, 14'') zentriert ist, wenn die Formteile (12, 12'', 16, 16'') in der Formschliessposition sind und wobei durch den Hohlraumteil (14, 14'') ein Raum (19, 19'') in der Form des Gegenstandes (60) definiert wird, wobei der Raum (19, 19'') einen eine Seitenwand definierenden Bereich (122, 122'') und einen sich um den Umfang erstreckenden Bereich (126, 126'') mit grösserer Dicke aufweist, der zwischen zwei Endbereichen des die Seitenwand definierenden Bereichs (122, 122'') angeordnet ist; und
zumindest zwei Einläufen (32, 32'') und Heisskanal-düsen (36, 36''), welche jedem Einlauf (32, 32'') zugeordnet sind, um aufgeschmolzenes Kunststoffmaterial in den sich um den Umfang erstreckenden Bereich (126, 126'') und danach in den Raum (19, 19'') einzuführen, ohne dass eine signifikante Wandbelastung erzeugt wird,
wobei der Formkernteil (18, 18', 18'', 18''') im wesentlichen innerhalb des Formhohlraumteil (14, 14'') zentriert bleibt.

2. Vorrichtung nach Anspruch 1, wobei der sich um den Umfang erstreckende Bereich (126, 126'') in der Mitte des die Seitenwand definierenden Bereiches (122, 122'') liegt; und die zumindest zwei Einläufe (32, 32'') und die zugeordneten Heisskanaldüsen (36, 36'') zum gleichzeitigen und fortlaufenden Einführen des Kunststoffplastikmaterials in den Raum (19, 19'') an zwei gegenüberliegenden Stellen des sich um den Umfang erstreckenden Bereichs (126, 126'') angeordnet sind.

3. Vorrichtung nach Anspruch 1 oder 2, wobei zumindest zwei Einläufe (32, 32'') nahe von Bereichen des sich um den Umfang erstreckenden Bereiches (126, 126'') angeordnet sind und jeder von dem anderen gleich beabstandet ist, wobei die Einläufe (32, 32'') im wesentlichen diesen sich um den Umfang erstreckenden Bereich (126, 126'') mit aufgeschmolzenem Kunststoffmaterial befüllen, bevor die übrigen Bereiche des Raumes (19, 19'') befüllt werden, um einen Versatz zwischen dem Formkern (18, 18', 18'', 18''') und dem Formhohlraum (14, 14'') zu minimieren.

4. Vorrichtung nach Anspruch 3, wobei jeder Einlauf (32, 32'') entweder nahe an der inneren Seite oder an der äusseren Seite des Raumes (19, 19'') angeordnet ist und mit einer Heisskanaldüse (36, 36'') in Verbindung steht.

5. Vorrichtung nach Anspruch 3 oder 4, wobei der Kernteil aus zwei Teilen (18', 18'') besteht und die Einläufe (32) in zumindest einen der Teile eingearbeitet sind.

6. Vorrichtung nach wenigstens einem der Ansprüche 1 bis 5, welche weiter umfasst:
Einrichtungen zum Kühlen des aufgeschmolzenen Kunststoffes in dem Raum (19, 19'') nachdem der Raum (19, 19'') vollständig mit dem aufgeschmolzenen Kunststoff gefüllt worden ist, um verbesserte Schweissbereiche zu formen; und
Einrichtungen zum Auswerfen der Gegenstände (60) aus der Einrichtung;
wobei diese Auswerfereinrichtungen entweder durch einen Abstreifring (146, 146'') geformt werden, der den Formkernteil (18, 18', 18'', 18''') umgibt, oder zumindest aus einer Entlüftungsbohrung (43, 44) besteht, welche sowohl mit einer Vakuumquelle als auch mit einer Luftquelle verbunden ist, wobei der Gegenstand (60) innerhalb des Formhohlraumteils (14) durch das Anlegen eines negativen Drucks durch die zumindest eine Entlüftungsbohrung (43, 44) durch die Vakuumquelle gehalten wird, wenn der Formkernteil (18, 18', 18'') sich in Formöffnungslage bewegt und der Gegenstand (60) aus dem Formhohlraumteil (14) durch Blasen von Luft aus der Luftquelle durch die zumindest eine Entlüftungsbohrung (43, 44) ausgeworfen wird, wenn der Formkernteil (18, 18', 18'') die Formöffnungslage erreicht.

7. Verfahren zum Spritzformen von hohlen Gegenständen (60), welches folgende Schritte umfasst:
Eine Anordnung einer Spritzformeinrichtung, die einen ersten, einen Hohlraumteil (14, 14'') definierenden Formteil (12, 12'') und einen zweiten, einen Kernteil (18, 18', 18'', 18''') definierenden Teil aufweist, wobei der Kernteil (18, 18', 18'', 18''') im wesentlichen innerhalb des Hohlraumteils (14, 14'') zentriert wird, wenn die Formteile (12, 12'', 16, 16'') in einer Formschliessposition sind, und einen Raum (19, 19'') in der Form des Gegenstandes (60) mit dem Hohlraumteil (14, 14'') ausformt, wobei der Raum (19, 19'') einen eine Seitenwand definierenden Bereich (122, 122'') und einen sich um den Umfang erstreckenden Bereich (126, 126'') von grösserer Dicke aufweist, welcher zwischen den Endbereichen des die Seitenwand definierenden Bereichs (122, 122'') angeordnet ist; und
ein Einbringen von geschmolzenem Kunststoffmaterial in diesen sich um den Umfang erstreckenden Bereich (126, 126'') und ferner in den Raum (19, 19'') durch zumindest zwei Einläufe (32, 32'') und Heisskanaldüsen (36, 36''), welche den Einläufen (32, 32'') zugeordnet sind, ohne Erzeugung von beachtenswerten Wandbelastungen,
wobei der Formkernteil (18, 18', 18'', 18''') im wesentlichen innerhalb des Formhohlraumteils (14, 14'') zentriert bleibt.

8. Verfahren nach Anspruch 7, wobei das aufgeschmolzene Kunststoffmaterial gleichzeitig und fortlaufend in den Bereich (126, 126'') an zumindest zwei Stellen des sich um den Umfang erstreckenden Bereichs (126, 126'') durch zumindest zwei Einläufe (32, 32'') eingeführt wird.

9. Vorrichtung nach Anspruch 8, wobei das aufgeschmolzene Kunststoffmaterial so durch die Einläufe (32, 32'') eingeführt wird, dass sich der um den Umfang erstreckende Bereich (126, 126'') sich vor den Bereichen des Raumes (19, 19'') füllt, welche die Seitenwände (122, 122'') des Gegenstandes (60) definieren, so dass ein Versatz zwischen dem Formkernteil (18, 18', 18'', 18''') und dem Formhohlraumteil (14, 14'') minimiert wird.

10. Verfahren nach Anspruch 9, welches ferner folgendes umfasst:
Ein Kühlen des aufgeschmolzenen Kunststoffes, nachdem der Raum (19, 19'') vollständig mit dem aufgeschmolzenen Kunststoff gefüllt worden ist; und
einen Auswerfer der Gegenstände (60) aus der Einrichtung, nachdem das Kühlen beendet worden ist, wobei das Auswerfen die Anordnung von zumindest einer Entlüftungsbohrung (43, 44), welche mit einer Vakuumquelle und einer Luftquelle verbunden ist, und von zumindest einem Entlüftungsstift (100), der mit der Luftquelle verbunden ist, umfasst, wobei der Gegenstand (60) in seiner Lage in dem Formhohlraum (14) durch ein Anlegen eines Vakuums durch die zumindest eine Entlüftungsbohrung (43, 44) gehalten wird, wenn der Formkern (18, 18,', 18'') sich in Formöffnungslage bewegt, und Luft durch die zumindest eine Entlüftungsbohrung (43, 44) und durch den zumindest einen Entlüftungsstift (100) eingeblasen wird, um den Gegenstand (60) von dem Formkern (18, 18', 18'') auszuwerfen.

11. Verfahren nach Anspruch 9, welches ferner folgendes umfasst:
Ein Kühlen des aufgeschmolzenen Kunststoffes, nachdem der Raum (19, 19'') vollständig mit dem aufgeschmolzenen Kunststoff gefüllt worden ist; und
ein Auswerfen des Gegenstandes (60) aus der Einrichtung, nachdem das Kühlen beendet worden ist, wobei das Auswerfen die Anordnung eines Abstreifringes (146, 146''), der im wesentlichen den Formkernteil (18, 18', 18'', 18''') umfasst, und ein Bewegen des Abstreifringes (146, 146'') relativ zu dem Formkernteil (18, 18', 18'', 18''') umfasst, um den Gegenstand von dem Formkern (18, 18', 18'', 18''') auszuwerfen.

## Revendications

1. Appareil pour mouler par injection un article creux en matière plastique (60) ledit appareil comportant :
une machine de moulage par injection ayant une première partie de moule (12, 12'') définissant une partie formant cavité femelle (14, 14''), une seconde partie de moule (16, 16'') définissant une partie formant noyau mâle (18, 18', 18'', 18''') et lesdites parties de moule étant mobiles entre une position de moule ouvert et une position de moule fermé,
ladite partie formant noyau de moule (18, 18', 18'', 18''') étant pratiquement centrée à l'intérieur de ladite partie formant cavité de moule (14, 14'') lorsque lesdites parties do moule (12, 12'', 16, 16'') sont dans ladite position de moule fermé et définissant avec ladite partie de cavité (14, 14'') un espace (19, 19'') ayant la forme dudit article (60), ledit espace (19, 19'') ayant une partie (122, 122'') définissant une paroi latérale, et une zone (126, 126'') s'étendant circonférentiellement, ayant une épaisseur plus grande, positionnée entre les deux extrémités de la partie définissant la paroi latérale (122, 122''), et
au moins deux portes (21, 32'') et des buses pour produit chaud (36, 36'') associées à chaque porte (32, 32'') pour introduire de la matière plastique fondue à l'intérieur de ladite zone s'étendant circonférentiellement (126, 126'') et de plus à l'intérieur dudit espace (19, 19'') sans créer de charge latérale importante quelconque,
de telle sorte que ladite partie formant noyau de moule (18, 18', 18'', 18''') reste pratiquement centrée à l'intérieur de ladite partie formant cavité de moule (14, 14'').

2. Appareil selon la revendication 1, dans lequel :
ladite zone s'étendant circonférentiellement (126, 126'') se trouve au niveau du milieu de ladite partie définissant une paroi latérale (122, 122''), et lesdites au moins deux portes (32, 32'') et les buses pour produit chaud associées (36, 36'') destinées à introduire simultanément et en continu ladite matière plastique fondue à l'intérieur dudit espace (19, 19'') sont agencées au niveau de deux parties opposées de ladite zone s'étendant circonférentiellement (126, 126'').

3. Appareil selon la revendication 1 ou 2, dans lequel lesdites au moins deux portes (32, 32'') sont positionnées adjacentes à des parties de ladite zone s'étendant circonférentiellement (126, 126'') et sont espacées de manière égale l'une de l'autre, lesdites portes (32, 32'') remplissant pratiquement ladite zone s'étendant circonférentiellement (126, 126'') à l'aide de matière plastique fondue avant de remplir les parties restantes dudit espace (19, 19'') de manière à rendre minimal le déplacement entre ledit noyau de moule (18, 18', 18'', 18''') et ladite cavité de moule (14, 14'').

4. Appareil selon la revendication 3, dans lequel chacune desdites portes (32, 32'') est positionnée adjacente à un côté intérieur ou à un côté extérieur dudit espace (19, 19'') et communique avec une buse pour produit chaud (36, 36'').

5. Appareil selon la revendication 3 ou 4, dans lequel ladite partie formant noyau mâle est constituée de deux parties (18', 18'') et lesdites portes (32) sont usinées dans au moins une desdites parties.

6. Appareil selon l'une quelconque des revendications 1 à 5, comportant en outre :
des moyens pour refroidir ladite matière plastique fondue située dans ledit espace (19, 19'') après que ledit espace (19, 19'') ait été complètement rempli à l'aide de ladite matière plastique fondue de manière à former des parties soudées améliorées, et
des moyens pour éjecter ledit article (60) à partir de ladite machine,
lesdits moyens d'éjection étant formés par un anneau d'extraction (146, 146'') entourant ladite partie formant noyau de moule (18, 18', 18'', 18''') ou au moins un trou d'évent (43, 44) communiquant avec une source de vide et une source d'air de sorte que ledit article (60) est maintenu à l'intérieur de ladite partie formant cavité de moule (14) par l'application d'une pression négative à travers ledit au moins un trou d'évent (43, 44) par l'intermédiaire de ladite source de vide lorsque ladite partie formant noyau de moule (18, 18', 18'') se déplace en direction de ladite position de moule ouvert et ledit article (60) est éjecté de ladite partie formant cavité de moule (14) en soufflant de l'air à partir de ladite source d'air à travers ledit au moins un trou d'évent (43, 44) lorsque ladite partie formant noyau de moule (18, 18', 18'') atteint ladite position de moule ouvert.

7. Procédé pour mouler par injection un article creux (60), qui comporte les étapes consistant à :
fournir une machine de moulage par injection ayant une première partie de moule (12, 12') définissant une partie formant cavité femelle (14, 14'') et une seconde partie de moule (16, 16'') définissant une partie formant noyau mâle (18, 18', 18'', 18'''), ladite partie formant noyau mâle (18, 18', 18'', 18''') étant pratiquement centrée à l'intérieur de ladite partie formant cavité, femelle (14, 14'') lorsque lesdites parties de moule (12, 12'', 16, 16'') sont dans la position de moule fermé et définissant un espace (19, 19'') ayant la forme dudit article (60) avec ladite partie formant cavité femelle (14, 14''), ledit espace (19, 19'') ayant une partie définissant une paroi latérale (122, 122'') et une zone s'étendant circonférentiellement (126, 126'') ayant une épaisseur plus grande, positionnée entre les deux extrémités de ladite partie définissant une paroi latérale (122, 122''), et
introduire de la matière plastique fondue à l'intérieur de ladite zone s'étendant circonférentiellement (126, 126'') et de plus a l'intérieur dudit espace (19, 19'') à travers au moins deux portes (32, 32'') et des buses pour produit chaud (36, 36'') associées à chaque porte (32, 32'') sans créer de charge latérale importante quelconque,
de sorte que ladite partie formant noyau de moule (18, 18', 18'', 18''') reste pratiquement centrée à l'intérieur de ladite partie formant cavité de moule (14, 14'').

8. Procédé selon la revendication 7, dans lequel ladite matière plastique fondue est introduite simultanément et en continu à l'intérieur de ladite zone (126, 126'') au niveau d'au moins deux parties de ladite zone s'étendant circonférentiellement (126, 126''), à travers lesdites au moins deux portes (32, 32'').

9. Procédé selon la revendication 8, dans lequel :
ladite matière plastique fondue est injectée à travers lesdites portes (32, 32'') de telle sorte que ladite zone s'étendant circonférentiellement (126, 126'') soit remplie avant lesdites parties dudit espace (19, 19'') définissant lesdites parois latérales (122, 122'') pour ledit article (60) de manière à rendre minimal le déplacement entre ladite partie formant noyau de moule (18, 18', 18'', 18''') et ladite partie formant cavité de moule (14, 14'').

10. Procéde' selon la revendication 9, comportant en outre :
le refroidissement de ladite matière plastique fondue après que ledit espace (19) ait été rempli complètement à l'aide de ladite matière plastique fondue, et
l'éjection dudit article (60) à partir de ladite machine après que ladite étape de refroidissement ait été réalisée, ladite étape d'éjection comportant l'agencement d'au moins un trou d'évent (43, 44) communiquant à la fois avec une source de vide et une source d'air et d'au moins un doigt (100) d'évent communiquant avec ladite source d'air, le maintien dudit article (60) en position contre la cavité de moule (14) en appliquant un vide à travers ledit au moins un trou d'évent (43, 44) lorsque ledit noyau de moule (18, 18', 18'') se déplace en direction d'une position de moule ouvert, et l'insufflation d'air à travers ledit au moins un trou d'évent (43, 44) et ledit au moins un doigt d'évent (100) pour éjecter ledit article (60) dudit noyau de moule (18, 18', 18'').

11. Procédé selon la revendication 9, comportant en outre :
le refroidissement de ladite matière plastique fondue après que ledit espace (19, 19'') ait été complètement rempli à l'aide de ladite matière plastique fondue, et
l'éjection dudit article (60) à partir de ladite machine après que ladite étape de refroidissement ait été réalisée, ladite étape d'éjection consistant à fournir un anneau d'éjection (146, 146'') entourant pratiquement ladite partie formant noyau de moule (18, 18', 18'', 18'''), et le déplacement dudit anneau d'éjection (146, 146'') par rapport à ladite partie formant noyau de moule (18, 18', 18'', 18''') pour éjecter ledit article (60) à partir dudit noyau de moule (18, 18', 18'', 18''').
